# EUROPEAN PATENT SPECIFICATION

(11) **EP 2 868 557 B1**
(45) Date of publication and mention of the grant of the patent: **19.04.2017**
(21) Application number: 14188110.2
(22) Date of filing: 08.10.2014
(51) Int. Cl.: B62J 6/16, B62K 11/00

(54) **Saddle type vehicle**
Motorrad
Véhicule à selle

(30) Priority: 29.10.2013 JP 2013224316
(43) Date of publication of application: 06.05.2015
(73) Proprietor: Yamaha Hatsudoki Kabushiki Kaisha, Iwata-shi, Shizuoka 438-8501 (JP)
(72) Inventor: Suzuki, Yoshimasa, Iwata-shi, Shizuoka 438-8501 (JP)
(74) Representative: Grünecker Patent- und Rechtsanwälte PartG mbB

(56) References cited:
- EP-A1- 2 468 613
- US-A1- 2008 023 244

## Description

The present invention relates to a saddle type vehicle according to the preamble of independent claim 1. Such a saddle type vehicle can be taken from the prior art document US 2008/0023244 A1.

There are saddle-type vehicles where the constituents surrounding the handle are brought closer to the head pipe. For instance, in the saddle type vehicle described in Japan Patent Laid-open Patent Publication JP-A-2009-73262, the rear portion of the headlight unit is arranged between the pair of front forks in the steering apparatus.

To further improve the lightness of steering, a small moment of inertia about the central axis of the steering shaft inserted in the head pipe is preferred. However, even if the headlight unit is brought closer to the head pipe, it tends to be difficult to bring components sufficiently close to the head pipe because the speedometer arranged above the headlight unit obstructs the upper bracket or the handle holder in the steering apparatus. The speedometer is also arranged in front of the upper bracket or the handle holder in the above-mentioned saddle type vehicle.

However, when the speedometer is arranged in front of the upper bracket, there is a limit to how much the moment of inertia is reduced even when the headlight unit is brought closer to the head pipe.

Additionally, when the speedometer is arranged in front of the upper bracket, the upper portion of the headlight cover extends largely outward in front of the upper bracket to cover the speedometer therewith. Therefore it tends to be difficult to sufficiently reduce the moment of inertia.

Incidentally, the key switch is usually arranged on the upper bracket or near the upper bracket to facilitate operation of the key switch when the vehicle is stopped and the rider is mounted on the vehicle. Therefore it is necessary to consider how not to hinder operation of the key switch when bringing the speedometer closer to the head pipe.

It is the object of the present invention to provide a saddle type vehicle, wherein the operability of the key switch is ensured while reducing the moment of inertia about the central axis of the steering shaft in the saddle type vehicle.

According to the present invention said object is solved by a saddle type vehicle having the features of independent claim 1. Preferred embodiments are laid down in the dependent claims.

Hence, a saddle type vehicle according to an embodiment of the present teaching includes a head pipe, a front wheel, a steering apparatus, a headlight unit, a speedometer, a stay, and a key switch. The steering apparatus includes a steering shaft, a pair of front forks, an upper bracket, a handle holder, and a handle. The steering shaft is inserted into the head pipe to rotate about the central axis of the head pipe. The pair of front forks rotatably support the front wheel. The upper bracket couples the upper end portion of the steering shaft and the upper end portion of the pair of front forks. The handle holder is arranged on the upper bracket. The handle is secured to the handle holder. At least a portion of the headlight unit is arranged between the pair of front forks. The speedometer is arranged above the headlight unit. The stay attaches the speedometer to the steering apparatus. The key switch is arranged forward of the handle holder. The speedometer is attached to the upper portion of the handle holder via the stay. The speedometer is arranged so that in a side view of the vehicle the speedometer crosses an extension of the central axis of the head pipe. The speedometer is located rearward of the key switch.

In the saddle type vehicle according to the embodiment, at least a portion of the headlight unit is arranged between the pair of front forks. Consequently, the headlight unit may be arranged closer to the head pipe. Arranging the headlight unit closer to the head pipe thereby reduces the moment of inertia about the central axis of the steering shaft. Additionally, the speedometer is arranged to intersect with an extension of the central axis of the head pipe. Therefore the moment of inertia about the central axis of the steering shaft is smaller compared to when the speedometer is arranged in front of the head pipe. The moment of inertia about the central axis of the steering shaft may also be reduced by preventing the upper portion of the headlight cover from extending largely outward in front of the upper bracket. Moreover, because the speedometer is attached to the upper portion of the handle holder, the handle holder supports the weight of the speedometer. Therefore a simply-configured stay may be used to attach the speedometer. Thus, making the stay lightweight thereby reduces the moment of inertia about the central axis of the steering shaft.

The key switch is arranged forward of the handle holder, and the speedometer is located rearward of the key switch. Therefore, this reduces the likelihood of the speedometer impeding the operability of the key switch because the speedometer is not located over the key switch. Assume momentarily that the speedometer is positioned forward of the key switch. In this case, if the speedometer is arranged rearward of its conventional position, then the key switch will be positioned further rearward of the speedometer. When located further rearward, the key switch may interfere with some component located rearward of the head pipe. In the saddle type vehicle according to the present embodiment, positioning the speedometer rearward of the key switch thereby prevents the key switch from interfering with components located rearward of the head pipe even when the speedometer is arranged rearward of its conventional position. Hereby it is possible to prevent impediment of the functions of the components surrounding the key switch, or the steering apparatus, or the like.

The direction in which the handle holder and the speedometer overlap preferably slopes rearward of the central axis of the head pipe. Therefore the speedometer does not limit the rider's vision. This improves visibility, and facilitates securing a large space over the key switch.

The headlight unit may include a lens portion and an upper headlight cover arranged above the lens portion. The upper headlight cover includes an inclined surface which, in a side view of the vehicle, slopes rearward and diagonally upward toward the speedometer. The inclined surface of the upper headlight cover and the speedometer thus appear to be located on the same plane. Therefore, the components surrounding the headlight unit may appear smaller.

A space may be formed in front of the speedometer and over the key switch. No components are arranged in the space formed in front of the speedometer and over the key switch. Therefore, the moment of inertia about the central axis of the steering shaft may be reduced.

The speedometer may be arranged so that, when viewed along the axial direction of the key switch, the speedometer does not overlap with the key switch. The arrangement facilitates the insertion and removal of a key into and from the key switch.

The front surface of the speedometer may be exposed to the outside. When the speedometer is exposed, there is no need to provide a cover on the front surface of the speedometer. Therefore, the moment of inertia about the central axis of the steering shaft may be reduced.

In a side view of the vehicle, at least a portion of the speedometer may overlap a region of the front forks extending in the direction along the central axis of the front forks. This prevents the speedometer from being arranged too far rearward of the headlight unit. Hereby, this reduces the amount of movement of the rider's gaze toward the speedometer.

The steering apparatus may further include a lower bracket coupling the steering shaft and the pair of front forks at a position below the upper bracket. At least a portion of the headlight unit is located between the upper bracket and the lower bracket. Hereby the headlight unit may be arranged closer to the head pipe.

The size of the speedometer in the vehicle width direction may be larger than the size of the handle holder in the vehicle width direction. The larger speedometer is greatly effective at reducing the moment of inertia compared to the case where the speedometer is arranged forward of the upper bracket.

The stay may be secured to the handle holder. Securing the stay to the handle holder makes reducing the size of the stay possible compared to when the stay is secured to another portion of the steering apparatus.

The handle holder may include a lower holder and an upper holder. The lower holder is secured to the upper bracket. The upper holder is provided on the lower holder. The upper holder and the lower holder sandwich and secure the handle therebetween. The stay may include an arm and an attachment plate. The arm is fastened to the lower holder. The speedometer may be attached to the attachment plate, which is provided on one end of the arm. The speedometer may be in contact with the upper portion of the upper holder via the attachment plate of the stay. Having the speedometer in contact with the upper portion of the upper holder via the attachment plate of the stay reduces the number of points needed to fasten the stay to the handle holder.

### Advantageous Effects of Invention

The saddle type vehicle according to the present teaching ensures the operability of the key switch while reducing the moment of inertia about the central axis of the steering shaft.

### BRIEF DESCRIPTION OF THE DRAWINGS

FIG. 1 is a side view of a saddle type vehicle;
FIG. 2 is a front view of the saddle type vehicle;
FIG. 3 is a plan view of the saddle type vehicle;
FIG. 4 is an exploded perspective view of the steering apparatus;
FIG. 5 is an enlarged side view of the front of the saddle type vehicle;
FIG. 6 is an enlarged view of the front of the saddle type vehicle along the axial direction of the key switch.

### DETAILED DESCRIPTION OF THE EMBODIMENTS

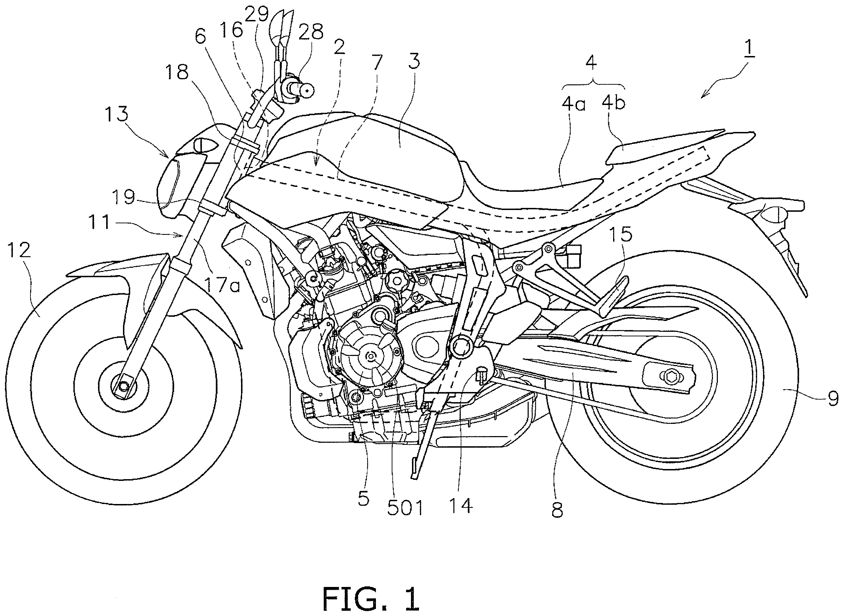

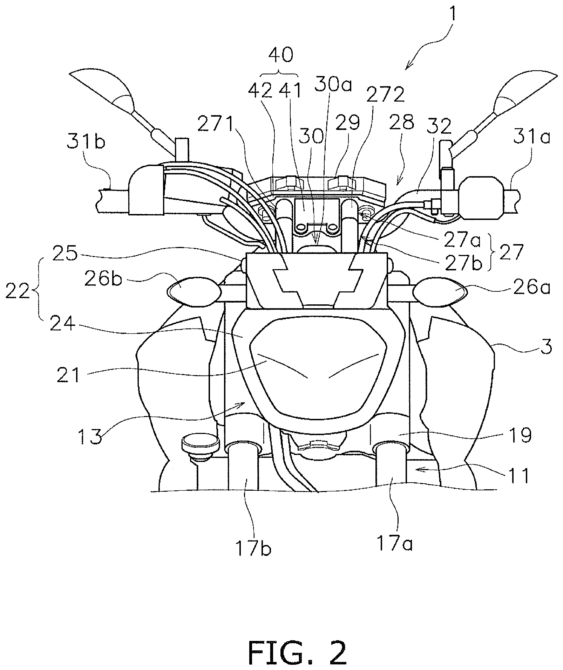

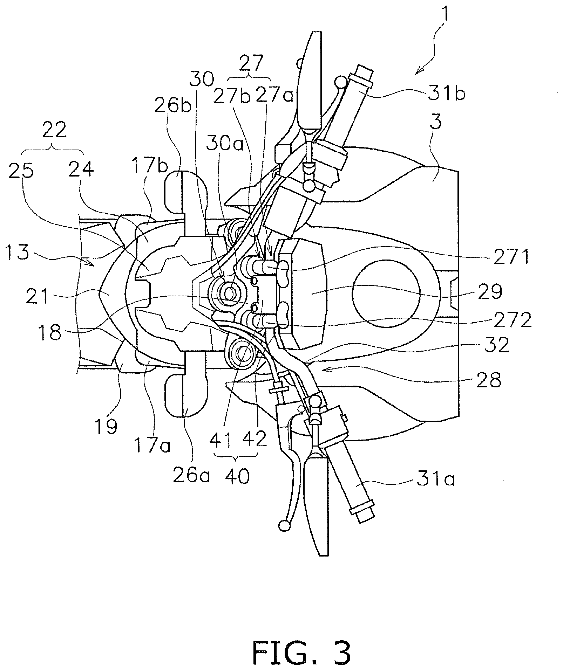

A saddle type vehicle 1 according to an embodiment is described below with reference to the drawings. FIG. 1 is a side view of the saddle type vehicle 1. FIG. 2 is a front view of the saddle type vehicle 1. FIG. 3 is a plan view of the saddle type vehicle 1. The saddle type vehicle 1 is a motorcycle. As illustrated in FIG. 1, the saddle type vehicle 1 includes a frame 2, a fuel tank 3, a seat 4, and an engine 5.

The frame 2 includes a head pipe 6 and a body frame 7. The body frame 7 is arranged behind the head pipe 6 and connected to the head pipe 6.

The fuel tank 3 is arranged behind the head pipe 6. The fuel tank 3 is arranged on the body frame 7. The seat 4 is arranged behind the fuel tank 3. The seat 4 is arranged on the body frame 7. The engine 5 is arranged below the fuel tank 3. The engine 5 is supported on the body frame 7. In the present embodiment, the terms front, rear, left, and right mean the front, rear, left, and right as viewed by a rider seated in the seat 4.

The saddle type vehicle 1 includes a rear arm 8 and a rear wheel 9. The rear arm 8 is attached to the body frame 7 to be able to pivot. The rear wheel 9 is arranged behind the engine 5 supported on the body frame 7 via the rear arm 8.

The seat 4 includes a main seat 4a and a rear seat 4b. The main seat 4a is arranged behind the fuel tank 3. The rear seat 4b is arranged behind the main seat 4a. The upper surface of the rear seat 4b is located above the upper surface of the main seat 4a. The upper surface of the seat 4 is located above the lower end of a headlight unit 13 (later described). The seat 4 illustrated in FIG. 1 is a dual saddle seat where the main seat 4a and the rear seat 4b are separate, however, the main seat 4a and the rear seat 4b may be unified.

A footrest 14 is arranged below the seat 4. The footrest 14 provides a location for the rider seated in the main seat 4a to place his or her feet. The footrest 14 is located rearward of the crankshaft 501 of the engine 5. A tandem footrest 15 is arranged behind the footrest 14. The tandem footrest 15 provides a location for a passenger seated behind the rider on the rear seat 4b to place his or her feet. The tandem footrest 15 is located beside the rear wheels 9.

FIG. 1 illustrates only the left side of the left and right footrests 14. Similarly, FIG. 1 illustrates only the left side of the left and right tandem footrests 15.

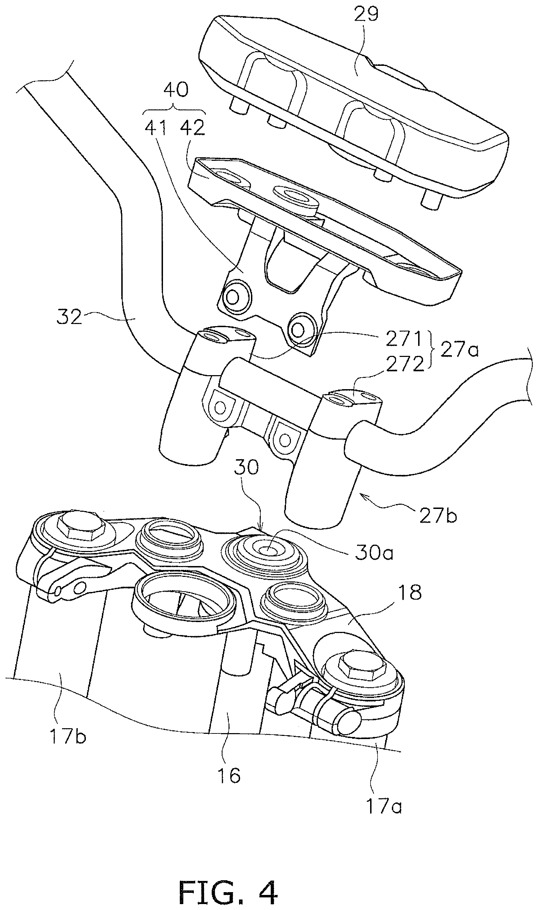

The saddle type vehicle 1 includes a steering apparatus 11, a front wheel 12, and the headlight unit 13. FIG. 4 is an exploded perspective view of the steering apparatus 11. The steering apparatus 11 includes a steering shaft 16, a pair of front forks 17a and 17b, an upper bracket 18, a handle holder 27, a handle 28, and a lower bracket 19. The steering shaft 16 is inserted into the head pipe 6 to rotate about the central axis of the head pipe 6. The pair of front forks 17a and 17b rotatably support the front wheel 12. The pair of front forks 17a and 17b are arranged to form a pair on the left and the right. The upper bracket 18 couples the upper end portion of the steering shaft 16 and the upper end portion of the pair of front forks 17a and 17b. The lower bracket 19 couples the steering shaft 16 and the pair of front forks 17a and 17b at a position below the upper bracket 18. The lower portion of the front forks 17a and 17b rotatably support the front wheel 12.

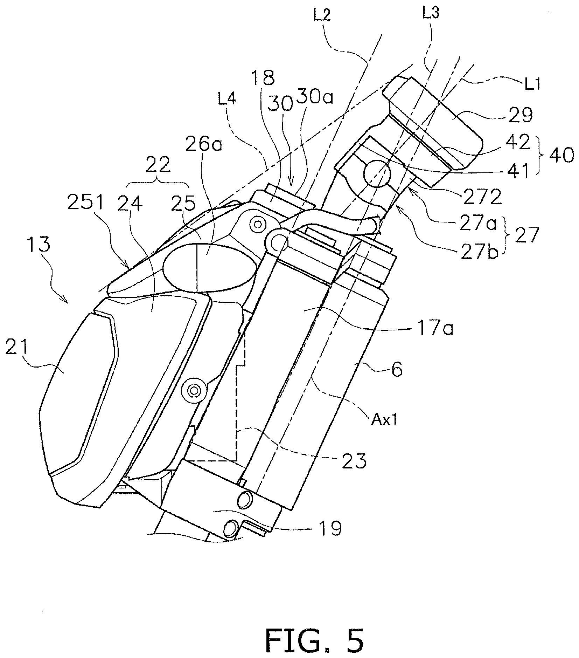

The central axis of the front forks 17a and 17b is located forward of the central axis of the steering shaft 16. The central axis of the front forks 17a and 17b extend in the same direction as the central axis of the steering shaft 16. When viewed from the side (refer to FIG. 5), a portion of the pair of front forks 17a and 17b appear to overlap the steering shaft 16. More specifically, the rear portion of the front forks 17a and 17b appear to overlap the front portion of the steering shaft 16 when viewed from the side.

The headlight unit 13 is arranged in front of the head pipe 6. The headlight unit 13 is supported on the steering apparatus 11. A portion of the headlight unit 13 is located between the upper bracket 18 and the lower bracket 19. A portion of the headlight unit 13 is arranged between the pair of front forks 17a and 17b.

FIG. 5 is an enlarged side view of the front of the saddle type vehicle 1. As illustrated in FIG. 5, the headlight unit 13 includes a lens portion 21, a headlight cover 22, and a headlight body 23. The lens portion 21 is formed of a transparent material.

The headlight cover 22 includes a lower headlight cover 24, and an upper headlight cover 25. The lower headlight cover 24 is arranged surrounding the lens portion 21. The lower headlight cover 24 is located above the lower end portion of the lower bracket 19. The lower headlight cover 24 is located below the lower end portion of the upper bracket 18.

The upper headlight cover 25 is arranged above the lens portion 21. The upper headlight cover 25 is located below the upper end portion of the upper bracket 18. The upper headlight cover 25 includes an inclined surface 251. In a side view of the vehicle, the inclined surface 251 slopes rearward and diagonally upward. Left and right turn indicators 26a and 26b are attached to the upper headlight cover 25. The left and right turn indicators 26a and 26b are located above the lens portion 21.

The headlight body 23 supports a headlight bulb (not shown). The headlight body 23 protrudes rearward from the headlight cover 22. A portion of the headlight body 23 is located between the upper bracket 18 and the lower bracket 19. A portion of the headlight body 23 is arranged between the front the pair of front forks 17a and 17b.

The handle 28 is omitted from the illustration in FIG. 5. The handle holder 27 is arranged on the upper bracket 18.

As illustrated in FIG. 2 and FIG. 3, the handle 28 is secured to the handle holder 27. The handle 28 includes left and right grips 31 a and 31 b, and a handlebar 32. The handlebar 32 connects the left and right grips 31 a and 31 b. The handle holder 27 holds the middle portion of the handlebar 32 in the vehicle width direction. At least a portion of the handle holder 27 is located above the upper headlight cover 25. As illustrated in FIG. 2, at least a portion of the handle holder 27 is visible when the vehicle is viewed from the front.

Further, as illustrated in FIG. 2 through FIG. 4, the handle holder 27 includes an upper holder 27a, and a lower holder 27b. As illustrated in FIG. 5, the upper holder 27a includes an upper-right holder 271 and an upper-left holder 272. The upper-right holder 271 and the upper-left holder 272 are arranged separated from each other. The lower holder 27b is secured to the upper bracket 18. The handle 28 is sandwiched between the upper-right holder 271 and the lower holder 27b. The handle 28 is also sandwiched between the upper-left holder 272 and the lower holder 27b, in a similar manner as the upper-right holder 271 and the lower holder 27b.

The saddle type vehicle 1 includes a speedometer 29 and a key switch 30. The speedometer 29 includes a vehicle speed meter and a tachometer. The speedometer 29 may also include a fuel indicator and various other indicator lights. The speedometer 29 is arranged above the headlight unit 13. The speedometer 29 is attached to the upper portion of the handle holder 27. More specifically, the speedometer 29 is attached to the handle holder 27 via the stay 40. The stay 40 includes an arm 41 and a meter attachment plate 42. The lower end of the arm 41 is fastened to the lower holder 27b of the handle 28; the arm 41 extends upward and rearward. The meter attachment plate 42 is formed into a plate, and the front end of the meter attachment plate 42 is connected to the upper end of the arm 41. The lower surface of the meter attachment plate 42 is in contact with the upper portions of the upper-right holder 271 and the upper-left holder 272 respectively. In this manner, the lower end of the arm 41 is secured to the lower holder 27b and the lower surface of the meter attachment plate 42 is in contact with the upper portion of the upper holder 27a to thereby attach the speedometer 29 to the upper portion of the handle holder 27. As illustrated in FIG. 5, at least a portion of the speedometer 29 is visible when the vehicle is viewed from the front. As illustrated in FIG. 5, the speedometer 29 is arranged so that in a side view of the vehicle, the speedometer 29 crosses an extension of the central axis Ax1 of the head pipe 6.

A perpendicular line L1 passing through the upper surface of the handle holder 27 slopes rearward of the central axis Ax1 of the head pipe 6. In other words, the direction in which the handle holder 27 and the speedometer 29 overlaps slopes rearward of the central axis Ax1 of the head pipe 6. No other components are arranged in front of the speedometer 29. Accordingly the front surface of the speedometer 29 is exposed to the outside.

In a side view of the vehicle, a portion of the speedometer 29 overlaps a region of the front forks 17a and 17b extending in the direction along the central axis of the front forks 17a and 17b (that is, the region between dashed double-dot chain lines L2 and L3 in FIG. 5). For instance, the front end portion of the speedometer 29 overlaps the region of the front forks 17a and 17b extending in the direction along the central axis of the front forks 17a and 17b in a side view of the vehicle. Additionally, at least a portion of the speedometer 29 is located behind the region of the front forks 17a and 17b extending in the direction along the central axis of the front forks 17a and 17b. For instance, the rear end portion of the speedometer 29 is located behind the region of the front forks 17a and 17b extending in the direction along the central axis of the front forks 17a and 17b. As illustrated by the dashed double-dot chain line L4 in FIG. 5, in a side view of the vehicle, the inclined surface 251 of the upper headlight cover 25 slopes rearward and diagonally upward toward the speedometer 29. For example, in the side view of the vehicle, the inclined surface 251 slopes rearward and diagonally upward toward the front end portion of the speedometer 29.

As illustrated in FIG. 2 and FIG. 3, the size of the speedometer 29 in the vehicle width direction is larger than the size of the handle holder 27 in the vehicle width direction. Accordingly, the left end portion of the speedometer 29 is located to the left than the upper-left holder 272. Additionally, the right end portion of the speedometer 29 is located to the right than the upper-right holder 271.

As illustrated in FIG. 5, the upper end portion of the speedometer 29 is located above the upper end portion of the handle holder 27. The front end portion of the speedometer 29 is located forward of the rear end portion of the handle holder 27. The front end portion of the speedometer 29 is located forward of the rear end portion of the upper bracket 18. The rear end portion of the speedometer 29 is located rearward of the rear end portion of the upper bracket 18. The rear end portion of the speedometer 29 is located rearward of the head pipe 6. As illustrated in FIG. 3, at least a portion of the speedometer 29 overlaps the fuel tank 3 in a plan view of the vehicle. For example, the rear end portion of the speedometer 29 overlaps the fuel tank 3 in a plan view of the vehicle.

The key switch 30 is arranged forward of the handle holder 27. One end in the axial direction of the key switch 30 is configured as the operative end 30a thereof; the key switch 30 is attached to the upper bracket 18 so that the operative end 30a is exposed from the upper bracket 18. Moreover, the key switch 30 may be arranged separately in front of the upper bracket 18 instead of on the upper bracket 18. The upper end portion of the key switch 30 is located above the upper end portion of the upper headlight cover 25. In a side view of the vehicle, the axis of the key switch 30 is located forward of the center axis of the pair of front forks 17a and 17b. The axis of the key switch 30 is located forward of the center axis of the pair of front forks 17a and 17b. The axis of the key switch 30 extends in the same direction as the central axis of the steering shaft 16. The speedometer 29 is located rearward of the key switch 30. Accordingly, as illustrated in FIG. 3, the speedometer 29 does not overlap the key switch 30 in a plan view of the vehicle. Moreover, no other components are arranged over the key switch 30.

The key switch 30 shifts the saddle type vehicle 1 between the engine startable state and the engine stop state in accordance with, for instance, the rotation of a key inserted in the operative end 30a of the key switch 30. Additionally, the handle may locked by, for instance, turning a key while the handle 28 is turned all the way to the left or the right so that a piece protruding from the key switch 30 engages with the head pipe 6.

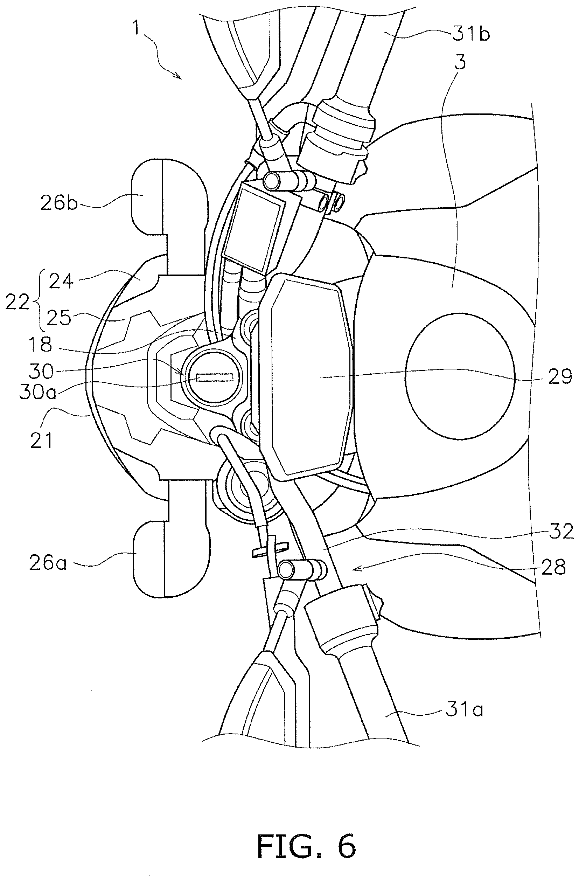

FIG. 6 is an enlarged view of the front of the saddle type vehicle 1 along the axial direction of the key switch 30. As illustrated in FIG. 6, the speedometer 29 is arranged so that, when viewed along the axial direction of the key switch 30, the speedometer 29 does not overlap with the key switch 30. There are no components arranged at the location overlapping the key switch 30 when viewing along the axial direction of the key switch 30. Therefore, a space is formed in front of the speedometer 29 and over the key switch 30.

The saddle type vehicle 1 according to the present embodiment has the following features.

A portion of the headlight unit 13 is arranged between the pair of front forks 17a and 17b. Consequently, the headlight unit 13 may be arranged closer to the head pipe 6. Arranging the headlight unit 13 closer to the head pipe 6 thereby reduces the moment of inertia about the central axis of the steering shaft 16. Additionally, the speedometer 29 is arranged to so that the speedometer 29 crosses an extension of the central axis Ax1 of the head pipe 6. Therefore the moment of inertia about the central axis of the steering shaft 16 is smaller compared to when the speedometer 29 is arranged in front of the head pipe 6. The moment of inertia about the central axis of the steering shaft 16 may also be reduced by preventing the upper portion of the headlight cover 22 from extending largely outward in front of the upper bracket 18. The speedometer 29 is arranged above the handle holder 27. Therefore the pressure from the weight of the speedometer 29 or operation thereof by the rider (button presses) are received at the handle holder 27 (and more specifically at the upper holder 27a) via the stay 40. Consequently, a simply-configured stay 40 may be used. Thus, making the stay lightweight thereby reduces the moment of inertia about the central axis of the steering shaft 16.

The key switch 30 is arranged forward of the handle holder 27, and the speedometer 29 is located rearward of the key switch 30. Therefore, this reduces the likelihood of the speedometer 29 impeding the operability of the key switch 30 because the speedometer 29 is not located over the key switch 30. Assume momentarily that the speedometer 29 is positioned forward of the key switch 30. In this case, if the speedometer 29 is arranged rearward of its conventional position, then the key switch 30 will be positioned further rearward of the speedometer 29. When located further rearward, the key switch 30 may interfere with some components located rearward of the head pipe 6. In the saddle type vehicle according to the present embodiment, positioning the speedometer 29 rearward of the key switch 30 thereby prevents the key switch 30 from interfering with components (for example, the fuel tank 3 or an outer covering) located rearward of the head pipe 6 even when the speedometer 29 is arranged rearward of its conventional position. Therefore it is possible to avoid limiting the steering angle of the steering apparatus 11 or, the capacity of the fuel tank 3.

The direction in which the handle holder 27 and the speedometer 29 overlaps slopes behind the central axis Ax1 of the head pipe 6. Therefore the speedometer 29 does not limit the rider's vision. This improves visibility, and facilitates securing a large space over the key switch 30.

In the side view of the vehicle, the inclined surface 251 of the upper headlight cover 25 slopes rearward and diagonally upward toward the speedometer 29. Therefore, as illustrated by the dashed double-dot chain line L4 in FIG. 5, the inclined surface 251 of the upper headlight cover 25 and the speedometer 29 thus appear to be located on the same plane. Furthermore, the components surrounding the headlight unit 13 may appear smaller.

A space is formed in front of the speedometer 29 and over the key switch 30. That is, no components are arranged in the space formed in front of the speedometer 29 and over the key switch 30. Therefore, the moment of inertia about the central axis of the steering shaft 16 may be reduced.

The speedometer 29 may be arranged so that, when viewed along the axial direction of the key switch 30, the speedometer 29 does not overlap the key switch 30. The arrangement facilitates inserting and removing a key into and from the key switch 30.

The front surface of the speedometer 29 is exposed to the outside. That is, a cover need not be provided for the front surface of the speedometer 29. Therefore, the moment of inertia about the central axis of the steering shaft 16 may be reduced.

In the side view of the vehicle, a portion of the speedometer 29 overlaps a region of the front forks 17a and 17b extending in the direction along the central axis of the front forks 17a and 17b. Therefore the speedometer 29 is not arranged too far away behind the headlight unit 13. Hereby, the amount of movement of the rider's gaze toward the speedometer 29 may be reduced.

A portion of the headlight unit 13 is located between the upper bracket 18 and the lower bracket 19. Hereby the headlight unit 13 may be arranged closer to the head pipe 6.

The size of the speedometer 29 in the vehicle width direction may be larger than the size of the handle holder 27 in the vehicle width direction. The larger speedometer 29 is greatly effective at reducing the moment of inertia compared to the case where the speedometer 29 is arranged in front of the upper bracket 18.

The stay 40 is secured to the handle holder 27. Therefore the stay 40 can be smaller compared to if the stay 40 were secured to another portion (e.g. the upper bracket 18) of the steering apparatus 11.

The speedometer 29 is in contact with the upper portion of the upper holder 27a via the meter attachment plate 42 of the stay 40. Therefore, fewer fastening points may be used for fastening the stay 40 to the handle holder 27.

The saddle type vehicle 1 is not limited to the kind of two-wheeled vehicle in the above-mentioned embodiment, and includes vehicles having three or more wheels, all-terrain vehicles, or snowmobiles. Additionally, scooters and mopeds may be included under the category of motorcycles.

The entire headlight unit 13, and not merely a portion of the headlight unit 13, may be arranged between the pair of front forks 17a and 17b. The entire headlight unit 13, and not merely a portion of the headlight unit 13 may be located between the upper bracket 18 and the lower bracket 19.

The entire speedometer 29, and not merely a portion of the speedometer 29 may overlap a region of the front forks 17a and 17b extending in the direction along the central axis of the front forks 17a and 17b in a side view of the vehicle. The size of the speedometer 29 in the vehicle width direction may be less than or equal to the size of the handle holder 27 in the vehicle width direction.

The direction in which the handle holder 27 and the speedometer 29 overlaps may be parallel to the central axis Ax1 of the head pipe 6. Alternatively, the direction in which the handle holder 27 and the speedometer 29 overlaps may slope in front of the central axis Ax1 of the head pipe 6.

Other components may be arranged in front of the speedometer 29 and over the key switch 30. The speedometer 29 may be arranged so that, when viewed along the axial direction of the key switch 30, the speedometer 29 overlaps the key switch 30.

The lower holder 27b may be configured by separate components in the right- left direction, similarly to the upper holder 27a, and may be combined with the upper bracket 18. The upper holder 27a may be configured as a single unit, similarly to the lower holder 27b. The stay 40 may be directly attached to the upper holder 27a without attaching the stay 40 to the lower holder 27b, to thereby attach the stay 40 to the upper portion of the handle holder 27. In this manner the stay 40 may be attached to the handle holder 27 in various ways.

Further, the stay 40 may be fastened to the upper bracket 18 or to the handle 28 without being fastened to the handle holder 27; the speedometer 29 may be attached to the upper portion of the handle holder 27.

## Claims

1. A saddle type vehicle comprising:
a head pipe (6);
a front wheel (12);
a steering apparatus (11) including a steering shaft (16) inserted into the head pipe (6) to rotate about a central axis of the head pipe (6), a pair of front forks (17a,17b) rotatably supporting the front wheel (12), an upper bracket (18) coupling an upper end portion of the steering shaft (16) and upper end portions of the pair of front forks (17a,17b), a handle holder (27) arranged on the upper bracket (18); and a handle (28) secured to the handle holder (27);
a headlight unit (13) at least partially arranged between the pair of front forks (17a,17b);
a stay (40) for attaching a speedometer (29) to the steering apparatus (11); and
a key switch (30) arranged forward of the handle holder (27); wherein
the speedometer (29) is attached to an upper portion of the handle holder (27) via the stay (40), and
the speedometer (29) is located rearward of the key switch (30),
**characterized in that**
the speedometer (29) is arranged above the headlight unit (13), and
the speedometer (29) is arranged so that, in a side view of the saddle type vehicle, the speedometer (29) crosses an extension of the central axis of the head pipe (6).

2. A saddle type vehicle according to claim 1, **characterized in that** a direction in which the handle holder (27) and the speedometer (29) overlaps slopes rearward of the central axis of the head pipe (6).

3. A saddle type vehicle according to claim 1 or 2, **characterized in that** the headlight unit (13) includes a lens portion (21) and an upper headlight cover (25) arranged above the lens portion (21), and
the upper headlight cover (25) includes an inclined surface (251) which, in a side view of the saddle type vehicle, slopes rearward and diagonally upward toward the speedometer (29).

4. A saddle type vehicle according to any one of claims 1 to 3, **characterized in that** a space is formed in front of the speedometer (29) and over the key switch (30).

5. A saddle type vehicle according to any one of claims 1 to 4, **characterized in that** the speedometer (29) is arranged so that when viewed along an axial direction of the key switch (30) the speedometer (29) does not overlap the key switch (30).

6. A saddle type vehicle according to any one of claims 1 to 5, **characterized in that** a front surface of the speedometer (29) is exposed to the outside.

7. A saddle type vehicle according to any one of claims 1 to 6, **characterized in that** in a side view of the saddle type vehicle at least a portion of the speedometer (29) overlaps a region of the front forks (17a,17b) extending in a direction along a central axis of the front forks (17a,17b).

8. A saddle type vehicle according to any one of claims 1 to 7, **characterized in that** the steering apparatus (11) further includes a lower bracket (19) coupling the steering shaft (16) and the pair of front forks (17a,17b) at a position below the upper bracket (18), and at least a portion of the headlight unit (13) is arranged between the upper bracket (18) and the lower bracket (19).

9. A saddle type vehicle according to any one of claims 1 to 8, **characterized in that** a size of the speedometer (29) in a vehicle width direction is larger than a size of the handle holder (27) in the vehicle width direction.

10. A saddle type vehicle according to any one of claims 1 to 9, **characterized in that** the stay (40) is secured to the handle holder (27).

11. A saddle type vehicle according to claim 10, **characterized in that** the handle holder (27) includes a lower holder (27b) secured to the upper bracket (18), and an upper holder (27a) provided on the lower holder (27b), and the handle (28) is sandwiched and secured between the lower holder (27b) and the upper holder (27a),
the stay (40) includes an arm (41) fastened to the lower holder (27b), and an attachment plate (42) provided on one end of the arm (41) for attaching the speedometer (29), and the speedometer (29) is in contact with the upper portion of the upper holder (27a) via the attachment plate (42) of the stay (40).

12. A saddle type vehicle according to any one of claims 1 to 10, **characterized in that** a footrest (14) is located rearward of a crankshaft (501) of an engine (5).

## Patentansprüche

1. Ein Sattel-Typ-Fahrzeug, das umfasst:
ein Kopf-Rohr (6);
ein Vorderrad (12);
eine Lenkvorrichtung (L), die eine Lenkwelle (16) beinhaltet, welche in das Kopf-Rohr (6) eingesetzt ist, um um eine Zentral-Achse des Kopf-Rohrs (6) zu drehen, ein Paar von Vorder-Gabelelementen (17a, 17b), die drehbar das Vorderrad (12) lagern, eine obere Klammer (18), welche einen oberen Endabschnitt der Lenkwelle (16) und
untere Endabschnitte des Paars von Vorder-Gabelelementen (17a, 17b) koppelt,
einen Lenkstangen-Halter (27), der an der oberen Klammer (18) angeordnet ist, und
eine Lenkstange (28) die an dem Lenkstangen-Halter (27) gesichert ist;
eine Haupt-Scheinwerfer-Einheit (13), die zumindest teilweise zwischen dem Paar von Vorder-Gabelelementen (17a, 17b) angeordnet ist;
eine Stütze (40) zum Anbringen eines Geschwindigkeits-Messers (29) an die Lenkvorrichtung (L); und
einen Schlüssel-Schalter (30), der vor dem Lenkstangen-Halter (27) angeordnet ist; wobei
der Geschwindigkeits-Messer (29) an einem oberen Abschnitt des Lenkstangen-Halters (27) über die Stütze (40) angebracht ist, und
der Geschwindigkeits-Messer (29) ist rückwärtig von dem Schlüssel-Schalter (30) plaziert,
**dadurch gekennzeichnet, dass**
der Geschwindigkeits-Messer (29) oberhalb der Haupt-Scheinwerfer-Einheit (13) angeordnet ist, und
der Geschwindigkeits-Messer (29) angeordnet ist, sodass in einer Seitenansicht des Sattel-Typ-Fahrzeugs, der Geschwindigkeits-Messer (29) eine Verlängerung der Zentral-Achse des Kopf-Rohrs (6) überschneidet.

2. Ein Sattel-Typ-Fahrzeug gemäß Anspruch 1, **dadurch gekennzeichnet, dass** eine Richtung in welcher der Lenkstangen-Halter (27) und der Geschwindigkeits-Messer (29) überlappen nach hinten von der Zentral-Achse des Kopf-Rohrs (6) abflacht.

3. Ein Sattel-Typ-Fahrzeug gemäß Anspruch 1 oder 2, **dadurch gekennzeichnet, dass** die Haupt-Scheinwerfer-Einheit (13) einen Licht-Scheibenabschnitt (21) und eine obere Haupt-Scheinwerfer-Abdeckung (25) beinhaltet, die oberhalb des Licht-Scheibenabschnitts (21) angeordnet ist, und
die obere Haupt-Scheinwerfer-Abdeckung (25) beinhaltet eine geneigte Fläche (251), welche in einer Seitenansicht des Sattel-Typ-Fahrzeugs, nach hinten und diagonal nach oben zu den Geschwindigkeits-Messern (29) abflacht.

4. Ein Sattel-Typ-Fahrzeug gemäß irgendeinem der Ansprüche 1 bis 3, **dadurch gekennzeichnet, dass** ein Raum vor dem Geschwindigkeits-Messer (29) und über dem Schlüssel-Schalter (30) ausgebildet ist.

5. Ein Sattel-Typ-Fahrzeug gemäß irgendeinem der Ansprüche 1 bis 4, **dadurch gekennzeichnet, dass** der Geschwindigkeits-Messer (29) angeordnet ist, sodass wenn entlang einer Axial-Richtung des Schlüssel-Schalters (30) betrachtet, der Geschwindigkeits-Messer (29) nicht mit dem Schlüssel-Schalter (30) überlappt.

6. Ein Sattel-Typ-Fahrzeug gemäß irgendeinem der Ansprüche 1 bis 5, **dadurch gekennzeichnet, dass** eine Frontfläche des Geschwindigkeits-Messers (29) nach außen frei liegt.

7. Ein Sattel-Typ-Fahrzeug gemäß irgendeinem der Ansprüche 1 bis 6, **dadurch gekennzeichnet, dass** in einer Seitenansicht des Sattel-Typ-Fahrzeugs, zumindest ein Abschnitt des Geschwindigkeits-Messers (29) einem Bereich der Vorder-Gabelelemente (17a, 17b) überlappt, die sich in eine Richtung entlang einer Zentral-Achse der Vorder-Gabelelemente (17a, 17b) erstreckt.

8. Ein Sattel-Typ-Fahrzeug gemäß irgendeinem der Ansprüche 1 bis 7, **dadurch gekennzeichnet, dass** die Lenkvorrichtung (L) weiterhin eine untere Klammer (19) beinhaltet, welche die Lenkwelle (16) und das Paar von Vorder-Gabelelemente (17a, 17b) an einer Position unterhalb der oberen Klammer (18) koppelt, und zumindest ein Abschnitt der Haupt-Scheinwerfer-Einheit (13) ist zwischen der oberen Kammer (18) und der unteren Klammer (19) angeordnet.

9. Ein Sattel-Typ-Fahrzeug gemäß irgendeinem der Ansprüche 1 bis 8, **dadurch gekennzeichnet, dass** eine Größe des Geschwindigkeits-Messers (29) in einer Fahrzeug-Breiten-Richtung größer ist als eine Größe des Lenkstangen-Halters (27) in der Fahrzeug-Breiten-Richtung.

10. Ein Sattel-Typ-Fahrzeug gemäß irgendeinem der Ansprüche 1 bis 9, **dadurch gekennzeichnet, dass** die Stütze (14) an dem Lenkstangen-Halter (27) gesichert ist.

11. Ein Sattel-Typ-Fahrzeug gemäß Anspruch 10, **dadurch gekennzeichnet, dass** der Lenkstangen-Halter (27) einen unteren Halter (27b), welcher an der unteren Klammer (18) gesichert ist, und einen oberen Halter (27a), welcher an dem unteren Halter (27b) vorgesehen ist, beinhaltet, und die Lenkstange (28) ist zwischen dem unteren Halter (27b) und dem oberen Halter (27a) aufgenommen und gesichert,
die Stütze (40) beinhaltet einen Arm (41), der an dem unteren Halter (27b) befestigt ist, und eine Anbringungs-Platte (42), die an einem Ende des Arms (41) zum Anbringen des Geschwindigkeits-Messers (29) vorgesehen ist, und der Geschwindigkeits-Messer (29) ist in Kontakt mit dem oberen Abschnitt des oberen Halters (27a) über die Anbringungs-Platte (42) der Stütze (40).

12. Ein Sattel-Typ-Fahrzeug gemäß irgendeinem der Ansprüche 1 bis 10, **dadurch gekennzeichnet, dass** eine Fuß-Stütze (14) rückwärtig von einer Kurbelwelle (501) eines Motors (5) plaziert ist.

## Revendications

1. Véhicule à selle comprenant :
un tube de fourche (6),
une roue avant (12),
une direction (11) incluant une colonne de direction (16) insérée dans le tube de fourche (6) pour tourner autour d'un axe central du tube de fourche (6), une paire de fourches avant (17a, 17b) supportant la roue avant (12) pour qu'elle puisse tourner, un support d'attache supérieur (18) couplant la partie terminale supérieure de la colonne de direction (16) et les parties terminales supérieures de la paire de fourches avant (17a, 17b), un support de poignée (27) agencé sur le support d'attache supérieur (18) et une poignée (28) immobilisée sur le support de poignée (27),
une unité formant bloc optique (13) au moins partiellement agencée entre la paire de fourches avant (17a, 17b), un organe de soutien (40) permettant de fixer un compteur de vitesse (29) à la direction, et
un interrupteur à clé (30) agencé en avant du support de poignée (27), dans lequel
le compteur de vitesse (29) est fixé à la partie supérieure du support de poignée (27) par l'intermédiaire de l'organe de soutien (40), et
le compteur de vitesse (29) est situé à l'arrière de l'interrupteur à clé (30),
**caractérisé en ce que**
le compteur de vitesse (29) est agencé au-dessus de l'unité formant bloc optique (13), et
le compteur de vitesse (29) est agencé de sorte à ce que le compteur de vitesse (29) croise une extension de l'axe central du tube de fourche (6), dans une vue latérale du véhicule à selle.

2. Véhicule à selle selon la revendication 1, **caractérisé en ce que** la direction dans laquelle le chevauchement du support de poignée (27) et du compteur de vitesse (29) forme une pente vers l'arrière de l'axe central du tube de fourche (6).

3. Véhicule à selle selon la revendication 1 ou la revendication 2, **caractérisé en ce que** l'unité formant bloc optique (13) inclut un organe formant lentille (21) et un carénage supérieur de bloc optique (25) agencé par-dessus l'organe formant lentille (21), et
le carénage supérieur de bloc optique (25) inclut une surface inclinée (251) qui forme une pente vers l'arrière et diagonalement vers le haut vers le compteur de vitesse (29) dans une vue latérale du véhicule à selle.

4. Véhicule à selle selon l'une quelconque des revendications 1 à 3, **caractérisé en ce qu'**un espace est formé en face du compteur de vitesse (29) et au-dessus de l'interrupteur à clé (30).

5. Véhicule à selle selon l'une quelconque des revendications 1 à 4, **caractérisé en ce que** le compteur de vitesse (29) est agencé de sorte que, lorsqu'il est vu le long de la direction axiale de l'interrupteur à clé (30), le compteur de vitesse (29) ne chevauche pas l'interrupteur à clé (30).

6. Véhicule à selle selon l'une quelconque des revendications 1 à 5, **caractérisé en ce que** la surface avant du compteur de vitesse (29) est exposée à l'extérieur.

7. Véhicule à selle selon l'une quelconque des revendications 1 à 6, **caractérisé en ce que** dans une vue latérale du véhicule à selle, au moins une partie du compteur de vitesse (29) chevauche une région des fourches avant (17a, 17b) s'étendant dans la direction courant le long de l'axe central des fourches avant (17a, 17b).

8. Véhicule à selle selon l'une quelconque des revendications 1 à 7, **caractérisé en ce que** la direction (11) inclut en outre un support d'attache inférieur (19) accouplant la colonne de direction (16) et la paire de fourches avant (17a, 17b) à une position située en dessous du support d'attache supérieur (18), et au moins une partie de l'unité formant bloc optique (13) est agencée entre le support d'attache supérieur (18) et le support d'attache inférieur (19).

9. Véhicule à selle selon l'une quelconque des revendications 1 à 8, **caractérisé en ce que** la taille du compteur de vitesse (29) dans la direction de la largeur du véhicule est plus grande que la taille du support de poignée (27) dans la direction de la largeur du véhicule.

10. Véhicule à selle selon l'une quelconque des revendications 1 à 9, **caractérisé en ce que** l'organe de soutien (40) est immobilisé sur le support de poignée (27).

11. Véhicule à selle selon la revendication 10, **caractérisé en ce que** le support de poignée (27) inclut un support inférieur (27b) immobilisé sur le support d'attache supérieur (18), et un support supérieur (27a) prévu sur le support inférieur (27b) ; et la poignée (28) est intercalée et immobilisée entre le support inférieur (27b) et le support supérieur (27a),
l'organe de soutien (40) inclut un bras (41) fixé au support inférieur (27b) et une plaque de fixation (42) prévue sur une extrémité du bras (41) pour fixer le compteur de vitesse (29) ; et le compteur de vitesse (29) est en contact avec la partie supérieure du support supérieur (27a) par l'intermédiaire de la plaque de fixation (42) de l'organe de soutien (40).

12. Véhicule à selle selon l'une quelconque des revendications 1 à 10, **caractérisé en ce qu'**un cale-pied (14) est situé en arrière du vilebrequin (501) du moteur thermique (5).
